# EUROPEAN PATENT APPLICATION

(11) **EP 4 704 209 A1**
(43) Date of publication of application: **04.03.2026**
(21) Application number: 24796784.7
(22) Date of filing: 09.04.2024
(51) Int. Cl.: H01M 10/0567, H01M 10/052

(54) **NONAQUEOUS ELECTROLYTIC LIQUID AND NONAQUEOUS ELECTROLYTE SECONDARY BATTERY**

(30) Priority: 28.04.2023 JP 2023074047
(71) Applicant: Panasonic Intellectual Property Management Co., Ltd., Kadoma-shi, Osaka 571-0057 (JP)
(72) Inventor: ASANO Kazuko, Kadoma-shi, Osaka 571-0057 (JP); OKI Yukihiro, Kadoma-shi, Osaka 571-0057 (JP); SHIRAKAMI Atsuro, Kadoma-shi, Osaka 571-0057 (JP)
(74) Representative: Novagraaf International SA
(86) International application number: PCT/JP2024/014426
(87) International publication number: WO 2024/225028

(57) **Abstract**

A nonaqueous electrolyte solution according to the present disclosure includes a nonaqueous solvent, an electrolyte dissolved in the nonaqueous solvent, and particles of an oxide insoluble in the nonaqueous solvent. The nonaqueous electrolyte solution according to the present disclosure has fluidity at 25°C. A molar mass of the oxide is 50 g/mol or more. An average particle diameter of the particles of the oxide is 1 nm or more and 500 nm or less. A secondary battery 100 according to the present disclosure includes a positive electrode 5, a negative electrode 6, and the nonaqueous electrolyte solution according to the present disclosure.

## Description

### TECHNICAL FIELD

The present disclosure relates to a nonaqueous electrolyte solution and a nonaqueous electrolyte secondary battery.

### BACKGROUND ART

Batteries using nonaqueous electrolyte solutions have high voltage and high energy density, and are under active research and development. In lithium secondary batteries, enhancements in battery characteristics have been pursued, for example, by improving the electrolyte.

Patent Literature 1 discloses a nonaqueous electrolyte secondary battery including a negative electrode formed of metallic lithium or a non-graphitizable carbon material, a positive electrode, and a nonaqueous electrolyte solution. Patent Literature 1 discloses that a nonaqueous electrolyte secondary battery including vinylene carbonate as a nonaqueous solvent exhibits favorable cycle characteristics. Patent Literature 2 discloses an ion secondary battery composed of a positive electrode formed of a composite lithium oxide or a composite sodium oxide, a negative electrode formed of a material capable of retaining lithium or sodium, a separator, and an electrolyte solution formed of a nonaqueous solvent, wherein the electrolyte solution contains fluoroethylene carbonate and phosphorus compound particles. Patent Literature 3 discloses a lithium secondary battery including an organic electrolyte solution containing alumina-based fine particles. Patent Literature 4 discloses a nonaqueous electrolyte secondary battery using an electrolyte solution to which at least one oxide selected from the group consisting of Al₂O₃, BaO, and MgO is added. Patent Literature 5 discloses a nonaqueous electrolyte secondary battery using a nonaqueous electrolyte composition including an electrolyte salt, a nonaqueous solvent, a matrix polymer, and a ceramic powder. Patent Literature 6 discloses a nonaqueous electrolyte secondary battery using a nonaqueous electrolyte composition including a nonaqueous solvent, an electrolyte salt, a matrix resin, a surfactant, and a ceramic powder as a filler.

### CITATION LIST

### Patent Literature

Patent Literature 1: JP 2005-268230 A
Patent Literature 2: JP 2012-018801 A
Patent Literature 3: JP H10-334730 A
Patent Literature 4: JP H04-284372 A
Patent Literature 5: JP 2010-198757 A
Patent Literature 6: JP 2010-257838 A

### SUMMARY OF INVENTION

### Technical Problem

The present disclosure provides a nonaqueous electrolyte solution suitable for enhancing the charge and discharge efficiency of batteries.

### Solution to Problem

A nonaqueous electrolyte solution of the present disclosure includes:
a nonaqueous solvent;
an electrolyte dissolved in the nonaqueous solvent; and
particles of an oxide insoluble in the nonaqueous solvent, wherein
the nonaqueous electrolyte solution has fluidity at 25°C,
a molar mass of the oxide is 50 g/mol or more, and
an average particle diameter of the particles is 1 nm or more and 500 nm or less.

### Advantageous Effects of Invention

According to the technique of the present disclosure, the charge and discharge efficiency of the battery can be enhanced.

### BRIEF DESCRIPTION OF DRAWINGS

FIG. 1 is a cross-sectional view schematically showing an example of a nonaqueous electrolyte secondary battery according to Embodiment 2.
FIG. 2 is a graph showing the results of a cycle test on Example 1 and Comparative Example 1.

### DESCRIPTION OF EMBODIMENTS

Embodiments of the present disclosure are described in detail below with reference to the drawings. The present disclosure is not limited to the embodiments described below.

### (Embodiment 1)

A nonaqueous electrolyte solution according to Embodiment 1 includes a nonaqueous solvent, an electrolyte dissolved in the nonaqueous solvent, and particles of an oxide insoluble in the nonaqueous solvent. The molar mass of the oxide is 50 g/mol or more. The average particle diameter of the particles of the oxide is 1 nm or more and 500 nm or less. The nonaqueous electrolyte solution according to Embodiment 1 has fluidity at 25°C. By using the nonaqueous electrolyte solution according to Embodiment 1 in a battery, it is possible to enhance the charge and discharge efficiency and thus the cycle characteristics. Furthermore, the nonaqueous electrolyte solution according to Embodiment 1 has enhanced dispersibility of the particles of the oxide, also enabling enhanced industrial productivity of the nonaqueous electrolyte solution.

In the present disclosure, the term "having fluidity at 25°C" means having a viscosity of 20,000 mPa•s or less at 25°C.

The viscosity of the nonaqueous electrolyte solution according to Embodiment 1 at 25°C may be, for example, 5,000 mPa•s or less, 3,000 mPa•s or less, or 1,000 mPa•s or less. The nonaqueous electrolyte solution according to Embodiment 1 is, for example, in liquid form. The liquid form includes sols. That is, the nonaqueous electrolyte solution according to Embodiment 1 is a nonaqueous colloidal solution in which the particles of the oxide are dispersed.

In the present disclosure, the term "particles of an oxide insoluble in a nonaqueous solvent" means particles of an oxide for which 100 mL or more of a nonaqueous solvent is required to dissolve 1 g at 25°C. That is, the solubility of the particles of the oxide in 100 mL of the nonaqueous solvent is 1 g or less. Here, the term "dissolve" means that, when the particles of the oxide are added to the nonaqueous solvent in a container and dissolved therein, both of the following are satisfied: the transmittance of the solution obtained does not change from the transmittance of the solvent, that is, no cloudiness is observed in the solution; and after standing for 24 hours, no sediment is observed on the bottom surface of the container.

The particles of the oxide may be particles of an oxide having a solubility of 0.1 g or less in 100 mL.

The oxide may include a metal element or a metalloid element. In the present disclosure, the term "metalloid element" refers to B, Si, Ge, As, Sb, and Te. The term "metal element" refers to all the elements in Groups 1 to 12 of the periodic table except hydrogen and all the elements in Groups 13 to 16 of the periodic table except B, Si, Ge, As, Sb, Te, C, N, P, O, S, and Se. The oxide may include an oxide of an element selected from the group of elements in Period 3 to Period 6 of the periodic table.

The oxide may include at least one oxide of an element selected from the group consisting of Zr, Al, Si, Ca, Ti, Zn, Y, Nb, Fe, Hf, Mg, Mn, Na, B, and W. The oxide may include at least one oxide of an element selected from the group consisting of Zr and Al.

The oxide may include at least one selected from the group consisting of ZrO₂ and Al₂O₃. That is, the nonaqueous electrolyte solution according to Embodiment 1 may include particles of at least one selected from the group consisting of ZrO₂ and Al₂O₃. According to the above configuration, the charge and discharge efficiency of the battery can be enhanced. The oxide may be ZrO₂.

There is a possibility that when trace amounts of moisture are detected within the battery, an oxide having a molar mass of less than 50 g/mol dissolves in the moisture. In the nonaqueous electrolyte solution according to Embodiment 1, since the molar mass of the oxide is 50 g/mol or more, even when trace amounts of moisture are present within the battery, the oxide does not dissolve in the moisture. Accordingly, the particles of the oxide can affect the coordination environment of Li ions with the solvent, enhancing the charge and discharge efficiency of the battery. An example of an oxide having a molar mass of less than 50 g/mol is Li₂O.

The content of the particles of the oxide in the nonaqueous electrolyte solution according to Embodiment 1 may be 0.1 vol% or more and 10 vol% or less. The content of the particles of the oxide may be 0.1 vol% or more and 8 vol% or less, 0.5 vol% or more and 6 vol% or less, 1 vol% or more and 5 vol% or less, or 1 vol% or more and 4 vol% or less. According to the above configuration, favorable dispersibility of the particles of the oxide and favorable fluidity of the nonaqueous electrolyte solution can be achieved.

The content of the particles of the oxide in the nonaqueous electrolyte solution according to Embodiment 1 can be determined, for example, by the following method. The nonaqueous electrolyte solution is filtered through a filter to separate the particles. The separated particles are washed with a solvent such as dimethyl carbonate, the washing solvent is evaporated and dried, and then the mass of the particles is measured. The volume of the particles is calculated from the mass of the particles and the specific gravity determined from the components of the particles. The components of the particles can be determined by any of various analytical methods, such as inductively coupled plasma spectrometry (ICP), X-ray diffractometry (XRD), infrared absorption spectroscopy (IR), and nuclear magnetic resonance spectroscopy (NMR). Thus, the content of the particles of the oxide in the nonaqueous electrolyte solution can be calculated. Additionally, the volume of the nonaqueous electrolyte solution can also be calculated from the composition and mass thereof. The composition of the nonaqueous electrolyte solution can be measured by liquid chromatography, gas chromatography, or the like.

Owing to the average particle diameter of the particles of the oxide being 500 nm or less, in a battery using the nonaqueous electrolyte solution according to the present disclosure, when the nonaqueous electrolyte solution permeates the electrode group, the particles of the oxide can penetrate into the electrode group. Accordingly, the particles of the oxide can affect the coordination environment of Li ions with the solvent, even in the vicinity of the positive electrode active material and the negative electrode active material disposed within the electrode group. The average particle diameter of the particles of the oxide may be 5 nm or more and 400 nm or less, or 10 nm or more and 300 nm or less.

The average particle diameter of the particles of the oxide may be smaller than the average particle diameter of the positive electrode active material of the later-described battery including the nonaqueous electrolyte solution according to Embodiment 1. The average particle diameter of the particles of the oxide may be 25% or less, 10% or less, 5% or less, or 1% or less relative to the average particle diameter of the positive electrode active material described above. Here, the positive electrode active material is in the form of secondary particles formed by agglomeration of primary particles, and the term "average particle diameter of the positive electrode active material" means the average particle diameter of the secondary particles. The particles of the oxide are typically insulating. Accordingly, when the average particle diameter of the particles of the oxide is smaller than the average particle diameter of the positive electrode active material, the increase in the resistance on the surface of the positive electrode can be suppressed, thereby further enhancing the charge and discharge efficiency.

The average particle diameter of the particles of the oxide may be equal to or smaller than the pore diameter of the separator in a battery using the nonaqueous electrolyte solution. According to the above configuration, the particles of the oxide do not clog the pores of the separator, and accordingly, the circulation of the electrolyte solution within the electrode group during charging and discharging is not hindered.

In the present disclosure, the average particle diameter refers to the median diameter (d50). The median diameter is the particle diameter at a cumulative volume equal to 50% in the volumetric particle size distribution. The volumetric particle size distribution can be measured by laser diffraction scattering using a commercially available laser diffractometer.

The electrolyte includes, for example, a lithium salt. Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonyl imide (LiN(SO₂C₂F₅)₂), LiAsF₆, LiCF₃SO₃, and lithium difluoro(oxalato)borate. The electrolyte can be at least one selected from the substances described above as the lithium salt. The lithium salt may contain fluorine (F). The lithium salt may be LiPF₆.

The concentration of the lithium salt in the nonaqueous electrolyte solution may be, for example, 0.5 mol/L or more and 2 mol/L or less. By controlling the concentration of the lithium salt within the above range, an electrolyte solution having excellent ionic conductivity and moderate viscosity can be obtained. However, the concentration of the lithium salt is not limited to the above range.

The nonaqueous solvent is not particularly limited, and for example, a cyclic carbonate, a chain carbonate, or a cyclic carboxylate is used.

Examples of cyclic carbonates include propylene carbonate (PC) and ethylene carbonate (EC).

Examples of chain carbonates include diethyl carbonate (DEC), ethyl methyl carbonate (EMC), and dimethyl carbonate (DMC).

Examples of cyclic carboxylates include γ-butyrolactone (GBL) and Y-valerolactone (GVL).

One nonaqueous solvent may be used alone, or two or more nonaqueous solvents may be used in combination. The nonaqueous solvent may include ethylene carbonate. In this case, the solubility of the electrolyte in the nonaqueous solvent can be enhanced.

The nonaqueous electrolyte solution according to Embodiment 1 may further contain other substances in addition to those described above. For example, the nonaqueous electrolyte solution according to Embodiment 1 may further contain an additive to enhance the dispersibility of the particles of the oxide. The additive is, for example, a fluorine-containing solvent. That is, the nonaqueous electrolyte solution according to Embodiment 1 may further contain a fluorine-containing solvent. According to the above configuration, it is possible to reduce agglomeration of the particles of the oxide that occurs over time and the resulting settling of the particles.

An example of the fluorine-containing solvent is a fluorinated ether. The fluorinated ether may include 1,1,2,2-tetrafluoroethyl-2,2,2-trifluoroethyl ether.

The nonaqueous electrolyte solution according to Embodiment 1 can be manufactured, for example, by the following method.

A lithium salt is dissolved in a nonaqueous solvent. The resulting solution, ZrO₂ particles or the like as the particles of the oxide, and ZrO₂ balls as a mixing medium are mixed in a ball mill. The mixing medium is removed from the resulting liquid mixture, and thus the nonaqueous electrolyte solution according to Embodiment 1 is obtained.

The method for manufacturing the nonaqueous electrolyte solution is not limited to the above. For example, an ultrasonic homogenizer may be used to disperse the particles of the oxide in the nonaqueous solvent in which the lithium salt is dissolved.

### (Embodiment 2)

A nonaqueous electrolyte secondary battery according to Embodiment 2 includes a positive electrode, a negative electrode, and the nonaqueous electrolyte solution according to Embodiment 1. By using the nonaqueous electrolyte solution according to Embodiment 1, the charge and discharge efficiency of the secondary battery can be enhanced.

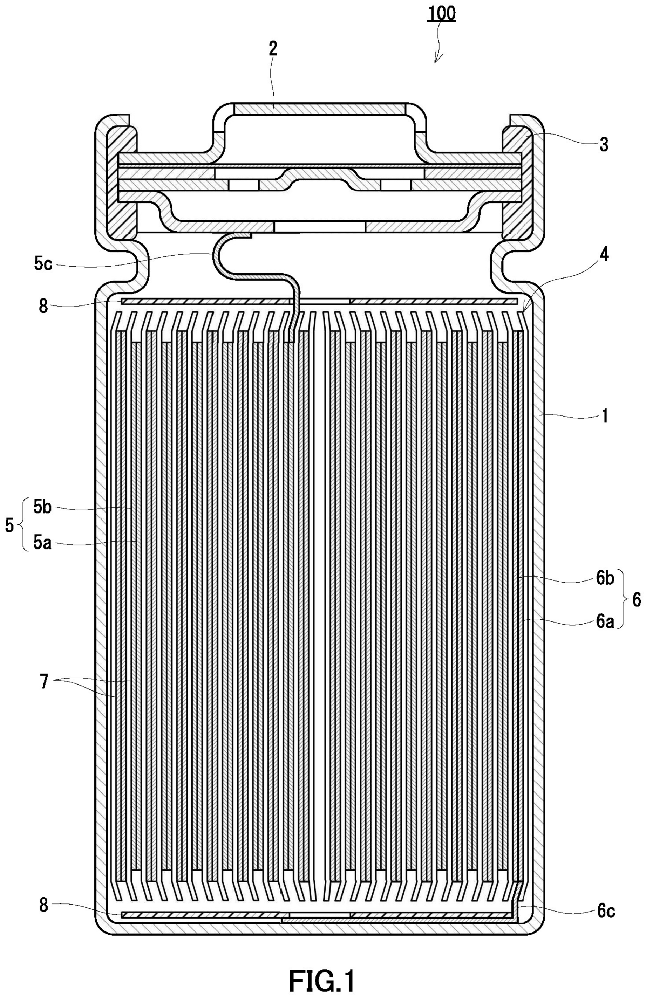

FIG. 1 is a cross-sectional view schematically showing an example of the nonaqueous electrolyte secondary battery according to Embodiment 2. A secondary battery 100 includes a container 1, an electrode group 4, and an electrolyte solution that is not shown. The electrolyte solution is the nonaqueous electrolyte solution according to Embodiment 1. The electrode group 4 has a wound structure. The electrode group 4 is housed in the container 1. The electrode group 4 includes a positive electrode 5, a negative electrode 6, and a pair of separators 7. The electrode group 4 is impregnated with the electrolyte solution. The opening of the container 1 is sealed with a sealing plate 2. The positive electrode 5 includes a positive electrode current collector 5a and a positive electrode active material layer 5b. To the positive electrode 5, one end of a positive electrode lead 5c is connected. The other end of the positive electrode lead 5c is connected to the back surface of the sealing plate 2. An insulating packing 3 is disposed to surround the sealing plate 2. The negative electrode 6 includes a negative electrode current collector 6a and a negative electrode active material layer 6b. To the negative electrode 6, one end of a negative electrode lead 6c is connected. The other end of the negative electrode lead 6c is connected to the bottom surface of the container 1. An insulating ring 8 is disposed on each of the upper and lower surfaces of the electrode group 4.

The constituent elements of the secondary battery 100 are described in detail below.

The positive electrode current collector 5a can be a sheet or film formed of a metal material such as aluminum, stainless steel, titanium, or an alloy of any of these. Aluminum and alloys thereof are inexpensive and can be easily formed into thin films and are accordingly suitable as materials of the positive electrode current collector 5a. The sheet or film may be porous or non-porous. The sheet or film is metal foil, metal mesh, or the like. A carbon material, such as carbon, as a conductive auxiliary material may be applied to the surface of the positive electrode current collector 5a.

The positive electrode active material layer 5b includes a positive electrode active material. The positive electrode active material can be a material capable of occluding and releasing lithium ions. The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery can be manufactured at a reduced cost and exhibit an increased average discharge voltage. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates.

The positive electrode active material may include a lithium nickel oxide having a layered rock-salt crystal structure. The proportion of Ni to the metal elements contained in the lithium nickel oxide except for Li may be 50 at% or more. The lithium nickel oxide may include an additional transition metal. The lithium nickel oxide is useful for achieving a high operating voltage.

The lithium nickel oxide may be represented by the following composition formula (I). The element M1 is at least one selected from the group consisting of V, Co, and Mn. The element M2 is at least one selected from the group consisting of Mg, Al, Ca, Ti, Cu, Zn, and Nb. The composition formula (I) satisfies 0.9 ≤ α ≤ 1.10, -0.05 ≤ β ≤ 0.05, 0.5 ≤ x1 < 1, 0 ≤ x2 ≤ 0.5, and 0 < 1-x1-x2 ≤ 0.5.

Li_{α}Niₓ₁M1ₓ₂M2₍₁₋ₓ₁₋ₓ₂₎O_{2+β} (I)

The positive electrode active material may be in the form of secondary particles formed by agglomeration of primary particles. The particle diameter of the primary particles constituting the secondary particles is, for example, 0.02 µm or more and 2 µm or less. The particle diameter of the primary particles is measured as the diameter of the circumscribed circle in a particle image observed using a scanning electron microscope (SEM). The average particle diameter of the secondary particles of the positive electrode active material may be, for example, 2 µm or more and 30 µm or less, more than 2 µm and 20 µm or less, or 3 µm or more and 10 µm or less.

The positive electrode active material layer 5b may include other materials such as a conductive additive and a binder.

The conductive additive is used to reduce the resistance of the positive electrode 5. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene.

The binder is used to enhance the binding properties of the materials constituting the positive electrode 5. The binder can be a polymer material, such as polyvinylidene fluoride, a vinylidene fluoride-hexafluoropropylene copolymer, a vinylidene fluoride-tetrafluoroethylene copolymer, polytetrafluoroethylene, carboxymethyl cellulose, polyacrylic acid, styrene-butadiene copolymer rubber, polypropylene, polyethylene, or polyimide.

The negative electrode current collector 6a can be a sheet or film formed of a metal material such as stainless steel, nickel, copper, or an alloy of any of these. The sheet or film may be porous or non-porous. The sheet or film is metal foil, metal mesh, or the like. A carbon material, such as carbon, as a conductive auxiliary material may be applied to the surface of the negative electrode current collector 6a.

The negative electrode active material layer 6b includes a negative electrode active material. The negative electrode active material can be a material capable of occluding and releasing lithium ions. The negative electrode active material includes, for example, at least one selected from the group consisting of a carbon material and a material capable of forming an alloy with lithium. An example of the carbon material is graphite. Examples of the material capable of forming an alloy with lithium include silicon, a silicon-containing oxide, tin, a zinc alloy, bismuth, and germanium. One selected from these negative electrode active materials may be used, or two or more selected from these negative electrode active materials may be used in combination.

The negative electrode active material layer 6b may include, as the negative electrode active material, at least one selected from the group consisting of graphite and silicon. The negative electrode active material layer 6b may include only graphite as the negative electrode active material. Graphite is recommended because graphite is less susceptible to deterioration even after repeated charging and discharging at deep depths. A carbon material other than graphite may be used as the negative electrode active material. Silicon exhibits higher capacity than graphite and is accordingly advantageous for increasing the capacity of the secondary battery 100.

The negative electrode active material layer 6b may include other materials such as a conductive additive and a binder. The materials that can be used as the conductive additive and the binder in the positive electrode active material layer 5b can also be used in the negative electrode active material layer 6b.

The electrolyte solution is the nonaqueous electrolyte solution according to Embodiment 1. The electrolyte solution is impregnated in the positive electrode 5, the negative electrode 6, and the separator 7. The electrolyte solution may fill the interior space of the container 1. The action of the electrolyte solution allows lithium ions to migrate between the positive electrode 5 and the negative electrode 6.

The average particle diameter of the particles of the oxide contained in the electrolyte solution may be equal to or smaller than the pore diameter of the separator 7.

The separator 7 has lithium-ion conductivity. The material of the separator 7 may be any material through which lithium ions are allowed to pass. The material of the separator 7 can be at least one selected from the group consisting of a gel electrolyte, an ion exchange resin membrane, a semipermeable membrane, and a porous membrane. When the separator 7 is formed of any of these materials, the safety of the secondary battery 100 can be sufficiently ensured. Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes containing glass paper obtained by weaving glass fibers into a nonwoven fabric.

The container 1 is, for example, a container made of a metal such as aluminum or stainless steel. The container 1 may have a cylindrical shape or a prismatic shape.

The electrode group 4 may be wound in a cylindrical shape or an elliptical shape.

The secondary battery 100 is not limited to any particular shape. In the present disclosure, as an example of the structure of the nonaqueous electrolyte secondary battery according to Embodiment 2, the configuration example shown in FIG. 1 is described. In this configuration example, a secondary battery includes an electrode group, in which a positive electrode and a negative electrode are wound with a separator interposed therebetween, and an electrolyte solution, both of which are housed in an exterior body. However, the secondary battery according to the present disclosure is not limited to this configuration example. The secondary battery according to the present disclosure may be in any form such as a cylindrical type, a prismatic type, a coin type, a button type, or a laminated type. Furthermore, as the electrode group in the secondary battery according to the present disclosure, the wound-type electrode group may be replaced with any other type of electrode group such as a stacked-type electrode group in which a positive electrode and a negative electrode are stacked with a separator interposed therebetween.

### (Embodiment 3)

A nonaqueous electrolyte secondary battery according to Embodiment 3 includes a positive electrode including a positive electrode current collector and a positive electrode active material layer, a negative electrode, and a nonaqueous electrolyte solution. The positive electrode active material layer is provided on the positive electrode current collector and includes a positive electrode active material. The positive electrode active material includes secondary particles formed by agglomeration of primary particles. The nonaqueous electrolyte solution includes a nonaqueous solvent, an electrolyte dissolved in the nonaqueous solvent, and particles of an oxide insoluble in the nonaqueous solvent. The nonaqueous electrolyte solution has fluidity at 25°C. The molar mass of the above oxide is 50 g/mol or more, and the average particle diameter of the particles of the oxide is 25% or less relative to the average particle diameter of the above secondary particles. The nonaqueous electrolyte secondary battery according to Embodiment 3 can achieve enhanced charge and discharge efficiency by including the electrolyte solution including the particles of the above oxide. Furthermore, the cycle characteristics can be enhanced. Moreover, the charge and discharge efficiency can be enhanced with no increase in the probability of a short-circuit of the battery.

The average particle diameter of the particles of the oxide included in the nonaqueous electrolyte solution may be 1 nm or more and 500 nm or less. The average particle diameter of the particles of the oxide may be 10% or less, 5% or less, or 1% or less relative to the average particle diameter of the above secondary particles.

As an example of the nonaqueous electrolyte secondary battery according to Embodiment 3, the secondary battery 100 shown in FIG. 1 is employed. The description of the positive electrode, the positive electrode current collector, the positive electrode active material layer, the negative electrode, and the nonaqueous electrolyte solution in the nonaqueous electrolyte secondary battery according to Embodiment 3 can be made by applying the description of the positive electrode 5, the positive electrode current collector 5a, the positive electrode active material layer 5b, the negative electrode 6, and the electrolyte solution in the secondary battery 100 according to Embodiment 2. That is, for the description of the components of the nonaqueous electrolyte solution included in the nonaqueous electrolyte secondary battery according to Embodiment 3, the description given in Embodiment 1 can be applied with respect to overlapping parts.

The application of the nonaqueous electrolyte solution of the present disclosure is not limited to the secondary battery 100. The nonaqueous electrolyte solution of the present disclosure can be applied to various secondary batteries in addition to lithium secondary batteries, such as sodium secondary batteries and magnesium secondary batteries. Accordingly, the nonaqueous electrolyte secondary battery of the present disclosure can be, in addition to a lithium secondary battery, any of various secondary batteries, such as a sodium secondary battery and a magnesium secondary battery.

### (Other Embodiments)

### (Supplementary Description)

The above description of the embodiments discloses the following techniques.

### (Technique 1)

A nonaqueous electrolyte solution including:
a nonaqueous solvent;
an electrolyte dissolved in the nonaqueous solvent; and
particles of an oxide insoluble in the nonaqueous solvent, wherein
the nonaqueous electrolyte solution has fluidity at 25°C,
a molar mass of the oxide is 50 g/mol or more, and
an average particle diameter of the particles is 1 nm or more and 500 nm or less.

According to this configuration, the charge and discharge efficiency of the battery can be enhanced. Furthermore, the particles of the oxide in the nonaqueous electrolyte solution have enhanced dispersibility, enabling enhanced industrial productivity.

### (Technique 2)

The nonaqueous electrolyte solution according to Technique 1, wherein the oxide includes at least one element selected from the group consisting of metal elements and metalloid elements. According to this configuration, the charge and discharge efficiency of the battery can be enhanced.

### (Technique 3)

The nonaqueous electrolyte solution according to Technique 1 or 2, wherein the oxide is at least one selected from the group consisting of ZrO₂ and Al₂O₃. According to this configuration, the charge and discharge efficiency of the battery can be enhanced.

### (Technique 4)

The nonaqueous electrolyte solution according to any one of Techniques 1 to 3, wherein the oxide is ZrO₂. According to this configuration, the charge and discharge efficiency of the battery can be enhanced.

### (Technique 5)

The nonaqueous electrolyte solution according to any one of Techniques 1 to 4, wherein a content of the particles in the nonaqueous electrolyte solution is 0.1 vol% or more and 10 vol% or less. According to this configuration, favorable dispersibility of the particles of the oxide and favorable fluidity of the nonaqueous electrolyte solution can be achieved.

### (Technique 6)

A nonaqueous electrolyte secondary battery including:
a positive electrode;
a negative electrode; and
the nonaqueous electrolyte solution according to any one of Techniques 1 to 5.

According to this configuration, the charge and discharge efficiency can be enhanced.

### (Technique 7)

A nonaqueous electrolyte secondary battery including:
a positive electrode including a positive electrode current collector and a positive electrode active material layer provided on the positive electrode current collector, the positive electrode active material layer including a positive electrode active material;
a negative electrode; and
a nonaqueous electrolyte solution, wherein
the positive electrode active material includes secondary particles formed by agglomeration of primary particles,
the nonaqueous electrolyte solution includes:
   a nonaqueous solvent;
   an electrolyte dissolved in the nonaqueous solvent; and
   particles of an oxide insoluble in the nonaqueous solvent,
   the nonaqueous electrolyte solution has fluidity at 25°C,
   a molar mass of the oxide is 50 g/mol or more, and
   an average particle diameter of the particles of the oxide is 25% or less relative to an average particle diameter of the secondary particles.

According to this configuration, the charge and discharge efficiency can be enhanced. Furthermore, the cycle characteristics can be enhanced. Moreover, the charge and discharge efficiency can be enhanced with no increase in the probability of a short-circuit of the battery.

### (Technique 8)

The nonaqueous electrolyte secondary battery according to Technique 7, wherein the oxide includes at least one element selected from the group consisting of metal elements and metalloid elements. According to this configuration, the charge and discharge efficiency can be enhanced.

### (Technique 9)

The nonaqueous electrolyte secondary battery according to Technique 7 or 8, wherein the oxide is at least one selected from the group consisting of ZrO₂ and Al₂O₃. According to this configuration, the charge and discharge efficiency can be enhanced.

### (Technique 10)

The nonaqueous electrolyte secondary battery according to any one of Techniques 7 to 9, wherein the oxide is ZrO₂. According to this configuration, the charge and discharge efficiency can be enhanced.

### (Technique 11)

The nonaqueous electrolyte secondary battery according to any one of Techniques 7 to 10, wherein a content of the particles in the nonaqueous electrolyte solution is 0.1 vol% or more and 10 vol% or less. According to this configuration, favorable dispersibility of the particles of the oxide in the nonaqueous electrolyte solution and favorable fluidity of the nonaqueous electrolyte solution can be achieved.

### (Technique 12)

The nonaqueous electrolyte secondary battery according to any one of Techniques 7 to 11, wherein an average particle diameter of the particles is 1 nm or more and 500 nm or less. The particles of the oxide in the nonaqueous electrolyte solution have enhanced dispersibility, enabling enhanced industrial productivity of the nonaqueous electrolyte solution and a battery using the same.

### Examples

The present disclosure is described in more detail below with reference to examples. The following examples are merely illustrative of one embodiment and are not intended to limit the present disclosure.

### (Example 1)

### (Preparation of Nonaqueous Electrolyte Solution)

Ethylene carbonate (EC), ethyl methyl carbonate (EMC), and dimethyl carbonate (DMC) were mixed in a volume ratio of EC:EMC:DMC = 20:5:75 to prepare a nonaqueous solvent. In the nonaqueous solvent thus obtained, LiPF₆ was dissolved to a concentration of 1 mol/L to obtain a solution. An amount of 10 g of the solution thus obtained, 2.37 g of ZrO₂ particles (average particle diameter: 15 nm) as the particles of the oxide, and 70 g of ZrO₂ balls (average particle diameter: 0.5 mm) as a mixing medium were introduced into a ball mill and mixed at 300 rpm for 2 hours. The ZrO₂ balls were removed from the resulting liquid mixture to obtain the nonaqueous electrolyte solution of Example 1. In the nonaqueous electrolyte solution of Example 1, the ZrO₂ particles were dispersed at 4 vol%. The nonaqueous electrolyte solution of Example 1 had fluidity at 25°C.

### (Fabrication of Test Cell)

A positive electrode active material having the composition LiNi_{0.8}Mn_{0.2}O₂, acetylene black (AB), and polyvinylidene fluoride (PVDF) were stirred with the addition of N-methyl-2-pyrrolidone (NMP) to prepare a positive electrode slurry. The positive electrode active material was in the form of secondary particles formed by agglomeration of primary particles, and the average particle diameter of the secondary particles was 5 µm. The mass ratio of these materials in the positive electrode active material layer was positive electrode active material:AB:PVDF = 96:2:2.

The positive electrode slurry was applied to the surface of an aluminum foil (1.45 cm × 1.45 cm), and the resulting coating film was dried and then rolled to form the positive electrode active material layer. Thus, the positive electrode was obtained.

A laminated half-cell was fabricated using the positive electrode, a Li metal foil (2 cm × 2 cm, thickness: 200 µm) as the counter electrode, a separator, and the nonaqueous electrolyte solution of Example 1. The separator used was a PP/PE/PP three-layer separator.

Thus, the evaluation cell of Example 1 was obtained.

### (Example 2)

The nonaqueous electrolyte solution of Example 2 was obtained in the same manner as in Example 1, except that the particles of the oxide were changed to 1.65 g of Al₂O₃ particles (average particle diameter: 50 nm). In the nonaqueous electrolyte solution of Example 2, the Al₂O₃ particles were dispersed at 4 vol%. The test cell of Example 2 was obtained using the nonaqueous electrolyte solution of Example 2, in the same manner as in Example 1.

### (Comparative Example 1)

EC, EMC, and DMC were mixed in a volume ratio of EC:EMC:DMC = 20:5:75 to prepare a nonaqueous solvent. In the nonaqueous solvent thus obtained, LiPF₆ was dissolved to a concentration of 1 mol/L to obtain the nonaqueous electrolyte solution of Comparative Example 1. That is, the nonaqueous electrolyte solution of Comparative Example 1 was prepared in the same manner as in Example 1, except that the particles of the oxide were not contained. The test cell of Comparative Example 1 was obtained using the nonaqueous electrolyte solution of Comparative Example 1, in the same manner as in Example 1.

### [Evaluation of Charge and Discharge Characteristics]

For the evaluation cells of Examples 1 and 2 and Comparative Example 1, at an ambient temperature of 25°C, a constant-current charge was performed at a current value of 0.1C until the voltage reached 4.5 V, and a constant-current discharge was performed at a current value of 0.1C until the voltage reached 2.5 V. Thus, the initial charge and discharge efficiency of the evaluation cells of Examples 1 and 2 and Comparative Example 1 was evaluated.

### [Cycle Test]

The evaluation cells of Example 1 and Comparative Example 1, on which the above charge and discharge were performed, were subjected to a temperature change to an ambient temperature of 55°C. For these cells, a constant-current charge was performed at a current value of 0.3C until the voltage reached 4.5V. Subsequently, a constant-current discharge was performed at a current value of 0.3C until the voltage reached 2.5 V. The charge and discharge described above were defined as one cycle, and the cycle was repeated 40 times to evaluate the discharge capacity, charge and discharge efficiency, and capacity retention rate.

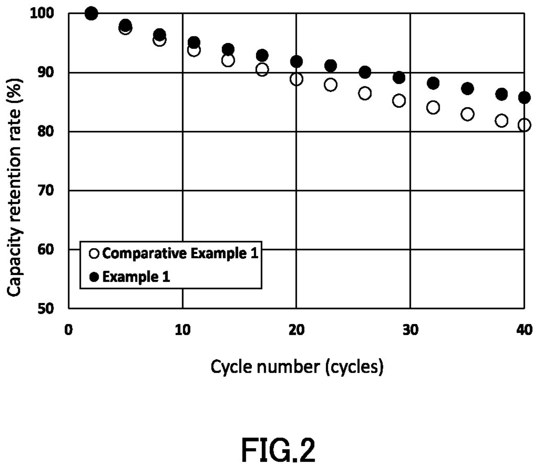

The evaluation results of the initial charge and discharge efficiency for the evaluation cells of Examples 1 and 2 and Comparative Example 1 are shown in Table 1. The initial charge and discharge efficiency shown in Table 1 is expressed as a relative value based on 100% of the initial charge and discharge efficiency of Comparative Example 1. The results of the cycle test on the evaluation cells of Example 1 and Comparative Example 1 are shown in Table 2. FIG. 2 is a graph showing the results of the cycle test on Example 1 and Comparative Example 1. The capacity retention rate is expressed as a relative value based on 100% of the discharge capacity at the 2nd cycle for each test cell.

**[Table 1]**

| | Particles of oxide | Initial charge and discharge efficiency (%) |
|---|---|---|
| Example 1 | ZrO₂ | 100.31 |
| Example 2 | Al₂O₃ | 100.16 |
| Comparative Example 1 | - | 100.00 |

**[Table 2]**

| | Example 1 | | | Comparative Example 1 | | |
|---|---|---|---|---|---|---|
| Cycle | Discharge capacity (mAh/g) | Charge and discharge efficiency (%) | Capacity retention rate (%) | Discharge capacity (mAh/g) | Charge and discharge efficiency (%) | Capacity retention rate (%) |
| 2 | 228.0 | 98.6 | 100.0 | 227.1 | 98.3 | 100.0 |
| 10 | 217.8 | 99.3 | 95.5 | 214.3 | 99.0 | 94.4 |
| 20 | 209.4 | 99.5 | 91.8 | 201.9 | 99.1 | 88.9 |
| 30 | 202.5 | 99.6 | 88.8 | 192.7 | 99.4 | 84.9 |
| 40 | 195.5 | 99.6 | 85.7 | 184.2 | 99.4 | 81.1 |

### (Discussion)

In the evaluation of charge and discharge characteristics, the secondary batteries of Example 1 and Example 2 exhibited enhanced initial charge and discharge efficiency compared with the secondary battery of Comparative Example 1. Furthermore, in the cycle test, the secondary battery of Example 1 exhibited a high discharge capacity, an enhanced charge and discharge efficiency, and an enhanced capacity retention rate, compared with the secondary battery of Comparative Example 1. It is considered that the battery characteristics were improved because the coordination environment of Li ions with the solvent changed due to the inclusion of the particles of the oxide in the nonaqueous electrolyte solution. The results of the initial charge and discharge efficiency indicate that it is more preferable to use ZrO₂ as the oxide.

### INDUSTRIAL APPLICABILITY

The technique of the present disclosure is useful, for example, in lithium-ion secondary batteries.

## Claims

1. A nonaqueous electrolyte solution comprising:
a nonaqueous solvent;
an electrolyte dissolved in the nonaqueous solvent; and
particles of an oxide insoluble in the nonaqueous solvent, wherein
the nonaqueous electrolyte solution has fluidity at 25°C,
a molar mass of the oxide is 50 g/mol or more, and
an average particle diameter of the particles is 1 nm or more and 500 nm or less.

2. The nonaqueous electrolyte solution according to claim 1, wherein
the oxide comprises at least one element selected from the group consisting of metal elements and metalloid elements.

3. The nonaqueous electrolyte solution according to claim 1, wherein
the oxide is at least one selected from the group consisting of ZrO₂ and A₂O₃.

4. The nonaqueous electrolyte solution according to claim 1, wherein
the oxide is ZrO₂.

5. The nonaqueous electrolyte solution according to claim 1, wherein
a content of the particles in the nonaqueous electrolyte solution is 0.1 vol% or more and 10 vol% or less.

6. A nonaqueous electrolyte secondary battery comprising:
a positive electrode;
a negative electrode; and
the nonaqueous electrolyte solution according to any one of claims 1 to 5.

7. A nonaqueous electrolyte secondary battery comprising:
a positive electrode comprising a positive electrode current collector and a positive electrode active material layer provided on the positive electrode current collector, the positive electrode active material layer comprising a positive electrode active material;
a negative electrode; and
a nonaqueous electrolyte solution, wherein
the positive electrode active material comprises secondary particles formed by agglomeration of primary particles,
the nonaqueous electrolyte solution comprises:
a nonaqueous solvent;
an electrolyte dissolved in the nonaqueous solvent; and
particles of an oxide insoluble in the nonaqueous solvent,
the nonaqueous electrolyte solution has fluidity at 25°C,
a molar mass of the oxide is 50 g/mol or more, and
an average particle diameter of the particles of the oxide is 25% or less relative to an average particle diameter of the secondary particles.

8. The nonaqueous electrolyte secondary battery according to claim 7, wherein
the oxide comprises at least one element selected from the group consisting of metal elements and metalloid elements.

9. The nonaqueous electrolyte secondary battery according to claim 7, wherein
the oxide is at least one selected from the group consisting of ZrO₂ and Al₂O₃.

10. The nonaqueous electrolyte secondary battery according to claim 7, wherein
the oxide is ZrO₂.

11. The nonaqueous electrolyte secondary battery according to claim 7, wherein
a content of the particles in the nonaqueous electrolyte solution is 0.1 vol% or more and 10 vol% or less.

12. The nonaqueous electrolyte secondary battery according to claim 7, wherein
an average particle diameter of the particles is 1 nm or more and 500 nm or less.
